(19) Europäisches Patentamt
European Patent Office
Office européen des brevets

(11) Veröffentlichungsnummer: **0 006 112**
**B1**

(12) **EUROPÄISCHE PATENTSCHRIFT**

(45) Veröffentlichungstag der Patentschrift: **11.04.84**

(51) Int. Cl.³: **C 08 G 12/12, B 32 B 21/08**

(21) Anmeldenummer: **79101035.8**

(22) Anmeldetag: **05.04.79**

(54) Verfahren zur Herstellung von wärmehärtbaren Harnstoff-Formaldehyd-Harzen und deren Verwendung zum Tränken und/oder Beschichten von Trägerbahnen für die Oberflächenvergütung von Holzwerkstoffplatten.

(30) Priorität: **10.06.78 DE 2825590**

(43) Veröffentlichungstag der Anmeldung:
**09.01.80 Patentblatt 80/1**

(45) Bekanntmachung des Hinweises auf die Patenterteilung:
**11.04.84 Patentblatt 84/15**

(84) Benannte Vertragsstaaten:
**BE CH DE FR GB NL SE**

(56) Entgegenhaltungen:
**DE - A - 2 263 125**
**DE - A - 2 448 472**
**GB - A - 1 480 787**

(73) Patentinhaber: **Th. Goldschmidt AG**
**Goldschmidtstrasse 100 Postfach 101461**
**D-4300 Essen 1 (DE)**

(72) Erfinder: **Schamberg, Eckehard, Dr.**
**Grotehang 6**
**D-4300 Essen (DE)**
Erfinder: **Holtschmidt, Ulrich, Dr.**
**Veddershang 11**
**D-4300 Essen (DE)**
Erfinder: **Hellwig, Dieter**
**Fischerstrasse 2c**
**D-4630 Bochum (DE)**

Courier Press, Leamington Spa, England.

0 006 112

Verfahren zur Herstellung von wärmehärtbaren Harnstoff-Formaldehyd-Harzen und deren
Verwendung zum Tränken und/oder Beschichten von Trägerbahnen für die
Oberflächenvergütung von Holzwerkstoffplatten

Die Erfindung betrifft ein Verfahren zur Herstellung von wärmehärtbaren Harnstoff-Formaldehyd-Harzen mit einem Molverhältnis von 1:1 bis 1:1,5, wobei man

a) Harnstoff und Formaldehyd in wäßriger Lösung mit einem Mol-Verhältnis von 1:2 bis 1:4 im pH-Bereich 7,5 bis 10 bei 40 bis 95°C 5 bis 120 Minuten umsetzt, sodann
b) unter Einhaltung eines pH-Bereiches von 4 bis 6 bei 40 bis 95°C 1 bis 60 Minuten bis zu einer Fällungszahl von 1:1,5 bis 1:10 kondensiert,
c) Weiterkondensation unter Zugabe der restlichen Menge an Harnstoff

und die Verwendung der erfindungsgemäßen hergestellten Harze für die Tränkung und/oder Beschichtung von Trägerbahnen, die für die Oberflächenvergütung von Holzwerkstoffen bestimmt sind.

Wärmehärtbare Harnstoff-Formaldehyd-Harze nehmen aufgrund der vergleichsweise geringen Rohstoffkosten als Beschichtungsharze eine besondere Stellung ein. Dennoch hat man insbesondere für hochwertige Beschichtungen vorzugsweise Melaminformaldehydharze verwendet. Dies lag hauptsächlich daran, daß es große Schwierigkeiten bereitete, qualitativ hochwertige Harnstoff-Formaldehyd-Harze herzustellen. Harnstoff-Formaldehyd-Harze hatten insbesondere den Nachteil einer gegenüber Melaminformaldehydharzen geringeren Wasserbeständigkeit.

In den letzten Jahren sind jedoch Verfahren bekanntgeworden, nach denen hochwertige, temperaturbeständige, wärmehärtbare Harnstoff-Formaldehyd-Harze mit hervorragenden Oberflächenbildungseigenschaften hergestellt werden können.

So ist in der DE—OS 24 48 472 ein Verfahren beschrieben, nach dem wärmehärtbare Harnstoff-Formaldehyd-Harze herstellbar sind, die zur Tränkung und Beschichtung von Trägerbahnen verwendet werden können und die aufgrund ihrer besonderen Eigenschaften hochwertige Oberflächenbeschichtungen auf Holzwerkstoffplatten ermöglichen.

Auch diesen wärmehärtbaren Harnstoff-Formaldehyd-Harzen haften jedoch noch gewisse Mängel an. Diese bestehen im wesentlichen darin, daß in den Harzlösungen neben den Harzen eines anwendungstechnisch erwünschten Molekulargewichtsbereiches auch Harzanteile wesentlich geringeren und höheren Molekulargewichtes enthalten sind. Die höhermolekularen Harzanteile können oftmals zu Ausfällungen in der Lösung führen und behindern die Penetration der Harze in die Beschichtungsbahn, die in der Regel aus Papier besteht. Die niedermolekularen Anteile erhöhen die Hydrophilie des Beschichtungsharzes und führen in unausgehärtetem Zustand leicht zum Blocken (Zusammenkleben) der beschichteten Trägerbahnen beim Lagern.

Die wärmehärtbaren Harnstoff-Formaldehyd-Harze werden üblicherweise dadurch hergestellt, daß man zunächst Harnstoff und Formaldehyd im alkalischen pH-Bereich umsetzt, wobei im wesentlichen nur eine Addition des Formaldehyds an die $NH_2$-Gruppen des Harnstoffes unter Bildung von N-Methylolgruppen erfolgt. In einer nachfolgenden sauren Reaktionsstufe werden diese zunächst erhaltenen Verbindungen zu höhermolekularen, härtbaren Produkten kondensiert. Der Ablauf der Reaktion und der Aufbau der dabei gebildeten Reaktionsprodukte ist wesentlich vom gewählten Molverhältnis Harnstoff zu Formaldehyd abhängig. Je nach Formaldehydangebot erhält man Produkte mit hoher Wasserverträglichkeit oder solche, die nur noch sehr beschränkt bzw. bereits nicht mehr vollständig wasserlöslich sind.

Die begrenzte Wasserlöslichkeit von Harnstoff-Formaldehyd-Harzen mit niedrigem Formaldehydanteil ist dabei die Folge einer sehr breiten Verteilung der Molekulargewichte. Bei geringerem Formaldehydangebot erfolgt die Kondensation im sauren pH-Bereich weit weniger gleichmäßig als bei einem größeren Formaldehydangebot. Dieses geringere Formaldehydangebot führt zur Bildung höhermolekularer, zum Teil unlöslicher Kondensationsprodukte, wobei gleichzeitig in Folge des ungleichmäßigen Reaktionsablaufes auch relativ niedrigmolekulare Kondensationsprodukte gebildet werden. Wie bereits ausgeführt erhöhen die niedermolekularen Harzanteile insbesondere die Wasserempfindlichkeit des Beschichtungsharzes, während die höhermolekularen Kondensationsprodukte teilweise nicht mehr löslich sind und die Penetration der Harzlösungen in die Trägerbahnen verhindern.

Verschiebt man das Molverhältnis von Harnstoff zu Formaldehyd zu höheren Formaldehydgehalten, wird die Bildung höhermolekularer Kondensationsprodukte zwar zurückgedrängt oder unter Umständen ganz vermieden, jedoch werden die Harze in ausgehärtetem Zustand zunehmend wasserempfindlicher. Dies beeinträchtigt die Gebrauchseigenschaften der ausgehärteten Harze.

In der US—PS 3 198 761 ist zwar bereits ein Verfahren beschrieben worden, nach dem Harnstoff-Formaldehyd-Harze mit einem Molverhältnis von Harnstoff zu Formaldehyd von 1:1 bis 1:0,5 hergestellt werden können. Nach diesem Verfahren werden Harnstoff und Formaldehyd zunächst im alkalischen Bereich mit einem Molverhältnis von 1:1,3 bis 1:1,66 umgesetzt und anschließend bei pH 2,5 bis 5,0 kondensiert. Dem so erhaltenen Reaktionsprodukt wird nun Harnstoff in solcher Menge zugesetzt, daß ein Molverhältnis Harnstoff zu Formaldehyd von 1:1 bis 1:0,5 resultiert und erneut im pH-Bereich von 3,0 bis 5,5 kondensiert. Auch hierbei bilden sich aber Harze sehr unterschiedlichen

2

Molekulargewichtes, welche neben höhermolekularen Kondensationsprodukten insbesondere einen großen Anteil sehr niedermolekularer Produkte sowie freien Harnstoff enthalten und die deshalb für die Tränkung und Beschichtung von Papierbahnen zur Oberflächenvergütung von Holzwerkstoffplatten ungeeignet sind.

In der SU—PS 496 291 wird ein Verfahren beschrieben, nach dem durch aufeinanderfolgende Kondensation von Harnstoff und Formaldehyd, zunächst bei einem pH-Wert von 7 bis 8 und einer Temperatur von 80 bis 95°C, dann bei einem pH-Wert von 4 bis 5 und einer Temperatur von 80 bis 95°C unter nachfolgender Kondensation mit einer zusätzlichen Menge an stickstoffhaltiger Verbindung, insbesondere Harnstoff, Thioharnstoff, Melamin und Cyanursäure unter Vakuum ein Aminoplastklebharz hergestellt wird, und das dadurch gekennzeichnet ist, daß zur Gewährleistung eines niedrigen Gehaltes an freiem Formaldehyd im fertigen Harz und in den Abwässern sowie zur Verringerung der Menge des sich während des Warmverklebens von Werkstoffen absondernden freien Formaldehyds die Vorkondensation bei einem pH-Wert von 9 bis 11 und bei einer Temperatur von 65 bis 95°C durchgeführt wird, wobei das Verhältnis der Gesamtmenge an stickstoffhaltiger Verbindung und Formaldehyd in dem Molbereich von 1:0,9 bis 1,35 liegt.

Bei der Herstellung dieses Harzes werden ebenfalls sehr unterschiedliche Molekulargewichte erhalten. Insbesondere werden höhermolekulare Kondensationsprodukte, die zum Teil unlöslich sind und an der milchigen Trübung der Klebharzlösung zu erkennen sind, gebildet. Diese Harze eignen sich deshalb ebenfalls nicht für die Tränkung und Beschichtung von Papierbahnen zur Oberflächenvergütung von Holzwerkstoffplatten.

Aus der DE—OS 2 263 125 ist ein Verfahren zur kontinuierlichen Herstellung von Harnstoff-Formaldehyd-Kondensaten bekannt, welches in den Stufen (a) und (b) ähnlich abläuft wie beim erfindungsgemäßen Verfahren. Es unterscheidet sich jedoch in der Stufe (c) durch den pH-Wert, der erkennen läßt, daß im sauren Bereich kondensiert wird, wie dies auch eindeutig aus dem Beispiel hervorgeht. Außerdem wird die Kondensation 60—240 Minuten durchgeführt. Hierdurch werden Produkte erhalten, welche sehr hochmolekulare Anteile enthalten. Durch die saure Kondensation der dritten Stufe und die lange Kondensationszeit entstehen andere Produkte als bei unserem Verfahren, die andere Eigenschaften aufweisen. Bei diesen Produkten handelt es sich um Leimharze, die aufgrund ihrer hochmolekularen Anteile nicht als Tränkharze eingesetzt werden können.

Auch bei dem bereitsgenannten Verfahren zur Herstellung von Lösungen härtbarer Harnstoff-Formaldehydharze (DE—OS 24 48 472) verlaufen die Stufen (a) und (b) wie beim erfindungsgemäßen Verfahren. Jedoch erfolgt die Kondensation in der Stufe (c) in einem pH-Bereich von etwa 6—7. Ein weiterer Unterschied in der Stufe (c) besteht darin, daß gemäß dieser DE—OS maximal 0,3 Mol Harnstoff, bezogen auf 1 Mol Harnstoff, in der Stufe (a) zugesetzt werden. Dadurch erhält man nicht die molekulareinheitlichen Harnstoff-Formaldehydharze, wie sie durch den Verfahrensablauf in der erfindungsgemäßen Stufe (c) erhalten werden.

Der Erfindung liegt deshalb die Aufgabe zugrunde, ein Verfahren zur Herstellung von wärmehärtbaren Harnstoff-Formaldehyd-Harzen zu finden, welche weder höhermolekulare, die Penetration störende Harzanteile enthalten, noch relativ niedermolekulare, die Hydrophilie des Beschichtungsharzes erhöhende Harzanteile aufweisen.

Der Erfindung liegt insbesondere die Aufgabe zugrunde, Harnstoff-Formaldehyd-Harze herzustellen, bei denen das Molverhältnis von Harnstoff zu Formaldehyd 1:1 bis 1:1,5 beträgt und die im wesentlichen molekulareinheitlich sind und weder Penetrationsstörungen bei der Tränkung von Trägerbahnen, die für die Beschichtung von Holzwerkstoffplatten bestimmt sind, ergeben, noch zu einer störenden Hydrophilie des Beschichtungsharzes in der Trägerbahn vor und nach der Härtung führen.

Insbesondere zielt das Verfahren ab auf die Herstellung eines härtbaren Harnstoff-Formaldehyd-Harzes, bei dem das Molverhältnis von Harnstoff zu Formaldehyd 1:1 bis 1:1,2 beträgt.

Diese Aufgabe wird erfindungsgemäß dadurch gelöst, daß man in der Stufe c) die zur Erzielung eines Harnstoff/Formaldehyd-Mol-Verhältnisses von 1:1 bis 1:1,5 benötigte restliche Menge Harnstoff zugibt, die Weiterkondensation in einem pH-Bereich von 7,0 bis 10 vornimmt, wobei man die Kondensationsreaktion bei 75 bis 95°C 1 bis 45 Minuten bis zu einer Fällungszahl von 1:0,5 bis 1:3 durchführt und die erhaltene Lösung schließlich auf Raumtemperatur abkühlt.

Erfindungswesentlich ist somit zum Erhalt von Harzen eines Harnstoff/Formaldehyd-Verhältnisses von 1:1 bis 1:1,5 mit den geforderten Eigenschaften die Kombination dreier Verfahrensstufen a), b) und c), und die Einhaltung des Kondensationsgrades, bestimmt durch die Fällungszahl.

Unter der Fällungszahl versteht man dabei das Verhältnis aus Harzlösung und demjenigen Volumen Wasser, das zu 1 Vol.-Teil Harzlösung zugesetzt werden kann, wobei in der resultierenden Mischung bei Raumtemperatur gerade eine bleibende Trübung eintritt. Durch den Gehalt an relativ hochmolekularen Kondensationsprodukten bei den Harnstoff-Formaldehyd-Harzen mit niedrigem molaren Formaldehydanteil, wie sie dem Stand der Technik entsprechen, war die Kontrolle des Kondensationsgrades durch die Fällungszahl im gewünschten Bereich nicht möglich, da bereits zu einem relativ früheren Zeitpunkt der Kondensationsreaktion Trübungen in der Lösung auftraten. Durch die Möglichkeit, den Kondensationsgrad des Harzes während der Verfahrensstufen b), c) und gegebenenfalls d) durch die Fällungszahl zu überwachen, wird die reproduzierbare Herstellung von Harnstoff-Formaldehyd-Harzen mit gegenüber dem Stand der Technik noch erheblich niedrigem molaren Formaldehydanteil produktionstechnisch gesichert.

Beim erfindungsgemäßen Verfahren wird somit zunächst im alkalischen Bereich die Umsetzung von Harnstoff mit Formaldehyd in einem Molverhältnis von 1:1,5 bis 1:4 durchgeführt. Von besonderer Bedeutung ist dabei die Einhaltung dieses Molverhältnisses. In dem angegebenen pH-Bereich von 7,5 bis 10 sind im wesentlichen nur Additionsreaktionen zu beobachten. Besonders bevorzugt ist dabei ein pH-Bereich von 8 bis 9. Die Reaktion soll also in deutlich alkalischem Bereich durchgeführt werden.

Die in der Verfahrensstufe a) gebildeten Methylolharnstoffverbindungen werden nun in der Stufe b) innerhlab eines pH-Bereiches 4 bis 6 kondensiert, wobei die Kondensationsreaktion innerhalb eines Temperaturbereiches von 40 bis 95°C während einer Zeitdauer von 1 bis 60 Minuten ablaufen soll. Wichtig ist die Einhaltung des Kondensationsgrades, bestimmt durch die Fällungszahl von 1:1,5 bis 1:10.

Die Lösung des so erhaltenen Vorkondensats wird nun auf einen pH-Bereich von 7 bis 10, wiederum vorzugsweise von 7 bis 8, eingestellt.

Es wird sodann die restliche Harnstoffmenge zugefügt, die benötigt wird, um das gewünschte Molverhältnis von 1:1 bis 1:1,5 Harnstoff zu Formaldehyd einzustellen. In diesem alkalischen Bereich wird nun die Reaktion bei 70 bis 95°C während einer Zeitdauer von 1 bis 45 Minute durchgeführt, bis eine Fällungszahl von 1:0,5 bis 1:3 erreicht ist. Anschließend wird die Lösung auf Raumtemperatur abgekühlt.

Es ist dabei hervorzuheben, daß die zugesetzte Harnstoffmenge erheblich über der Menge liegt, die notwendig ist, um in der Lösung noch vorhandenen freien Formaldehyd zu binden. Für den Fachmann war nicht zu erwarten, daß der Harnstoff praktisch vollständig zur Umsetzung gelangt, wenn im alkalischen pH-Bereich gearbeitet wird. Für diesen überraschenden Reaktionsablauf sprechen z.B. die hervorragenden Eigenschaften der mit diesen Harzen hergestellten Oberflächenvergütungsschichten. Diese weisen keine störende Hydrophilie auf, woraus zu schließen ist, daß niedermolekulare Kondensationsprodukte oder freier Harnstoff im Harz nicht in nennenswerten Mengen enthalten sind. Auch die Tatsache, daß die Wasserverdünnbarkeit der Harze in Reaktionsstufe c) abnimmt, ist ein sicheres Zeichen dafür, daß höhermolekulare Produkte gebildet werden, die jedoch andererseits nicht so hochmolekular sind, daß sie unlöslich wären.

Damit ist das erfindungsgemäße Verfahren geeignet, möglichst molekulareinheitliche Harnstoff-Formaldehyd-Harze mit dem gewünschten niedrigen molaren Formaldehydanteil herzustellen. Durch das erfindungsgemäße Verfahren wird es somit möglich, extrem niedrige Molverhältnisse von Harnstoff zu Formaldehyd, bis herab zu 1:1, einzuhalten. Entsprechend dem Stand der Technik lag diese Grenze für Imprägnier- und Beschichtungsharze bisher bei etwa 1:1,5. Die erfindungsgemäß hergestellten Harze weisen deshalb nach der Imprägnierung und Trocknung im unausgehärteten wie auch nach der Verpressung im ausgehärteten Zustand eine extrem niedrige Wasserempfindlichkeit auf. Die Lösungen dieser Harze penetrieren die Trägerbahnen gleichzeitig aber ausgezeichnet.

Eine weitere Ausführungsform des erfindungsgemäßen Verfahrens ist dadurch gekennzeichnet, daß man bei der Verfahrensstufe c) bis zu einer Fällungszahl von $1:\geqq1,5$ umsetzt und in einer weiteren Verfahrensstufe

d) erneut im pH-Bereich 4 bis 6 bei 70 bis 95°C bis zu 15 Minuten bis zu einer Fällungszahl von $1:\geqq0,5$ nachkondensiert, anschließend abkühlt und auf einen pH-Bereich von 7 bis 10 einstellt.

Die Einstellung des pH-Bereiches von 7 bis 10 dient der Stabilisierung der Harzlösung und soll eine unkontrollierte Nachkondensation bei der Lagerung ausschalten.

Ein weiterer Abbau von Molekulargewichtsextremen nach oben und nach unten läßt sich erreichen, wenn die Reaktionstemperaturen in den Verfahrensschritten a) und b) gegenüber den Reaktionstemperaturen des Standes der Technik ($\geqq70°C$) deutlich abgesenkt werden auf 40 bis 70°C. Der zusätzliche Effekt läßt sich daran erkenne, daß die Opaleszenz der Harzlösungen, die im allgemeinen nach einigen Stunden eintritt, deutlich gemindert ist. Hand in Hand damit geht eine bessere Penetrierfähigkeit der Harzlösung bei der Imprägnierung der Trägerbahnen. Schließlich wird auch das hygroskopische Verhalten der imprägnierten und getrockneten Trägerbahnen vermindert, was für eine Absenkung des Anteils an niedrigstmolaren Bestandteilen spricht.

Die erfindungsgemäß hergestellten Harze sind in wäßriger Lösung über mehrere Wochen lagerstabil.

Eine besonders bevorzugte Ausführungsform des erfindungsgemäßen Verfahrens besteht darin, daß man in der Verfahrensstufe a) das Molverhältnis von Harnstoff zu Formaldehyd von 1:2 bis 1:2,5 einhält.

Harze mit besonders guten anwendungstechnischen Eigenschaften werden erhalten, wenn man den pH-Bereich in Stufe a) und c) mit Ammoniak und/oder Urotropin einstellt und in Stufe b) den pH-Bereich 4 bis 6 durch Zugabe von Ammoniak und/oder Urotropin aufrechterhält.

Während oder nach der Herstellung des erfindungsgemäßen Harnstoff-Formaldehyd-Harzes können an sich bekannte Modifizierungsmittel und Härter zugesetzt werden. Derartige Härter sind z.B.

latente Härter sowie chemisch in das Harzmolekül eingebaute Härter. Modifizierungsmittel zur Erhöhung der Rißbeständigkeit und zur Verbesserung der Elastizität der Beschichtung sind z.B. Amide der Toluolsulfonsäure.

Dabei ist im Rahmen des erfindungsgemäßen Verfahrens der Zusatz einer Aminosulfonsäure der Formel $NH_2(CH_2)_xSO_3H$, wobei x eine ganze Zahl von 0 bis 4 ist, bevorzugt. Die Aminosulfonsäure wird dabei insbesondere vor oder während der Verfahrensstufe a) in Mengen von 0,2 bis 10 mMol zugesetzt. Ein weiterer Zusatz von 0,8 bis 10 mMol Aminosulfonsäure zu der nach Ablauf der Verfahrensstufe a) erhaltenen Lösung vor der Verfahrensstufe b) führt zu Produkten mit besonders guten Gebrauchseigenschaften.

Als Mittel zur Verbesserung des Harzflusses unter Verpressungsbedingungen und/oder zur Erhöhung der Rißbeständigkeit sind Polyhydroxyverbindungen, z.B. Zucker, bekannt. Die Gebrauchseigenschaften der Harze können ferner durch Zusatz von Acrylatdispersionen beeinflußt werden. Eine zusammenfassende Darstellung der nach dem Stand der Technik bekannten Modifizierungsmittel kann der Zeitschrift "Kunststoff-Rundschau" 13 (1966), Seite 349 ff. entnommen werden.

In den folgenden Beispielen wird die erfindungsgemäße Herstellung der Harnstoff-Formaldehyd-Harze beschrieben sowie ihre Verwendung zur Tränkung und Beschichtung von Trägerbahnen für die Oberflächenvergütung von Holzwerkstoffplatten verdeutlicht.

Beispiel 1

Stufe a)

In einem 2 l Vierhalskolben, ausgerüstet mit Thermometer, Rückflußkühler und pH-Meßvorrichtung, werden 487 g (6 Mol) einer 37 %igen Formalinlösung und 1,6 g (0,8 mMol) einer 5 %igen wäßrigen Amidosulfonsäurelösung vorgelegt. Nach Zugabe von 6,4 g (15 mMol) einer 33 %igen wäßrigen Urotropinlösung werden 180 g (3 Mol) Harnstoff eingetragen und 34,2 g (0,2 Mol) p-Toluolsulfonamid zugesetzt. In der Reaktionslösung wird nun bei Raumtemperatur ein pH-Wert von 8,4 gemessen. Die Reaktionslösung wird auf 90°C aufgeheizt und nach 10 Minuten werden 4,2 g (10 mMol) einer 33 %igen wäßrigen Urotropinlösung zugegeben, um den inzwischen auf Werte ≤6 abgesunkenen pH-Wert des Reaktionsgemisches wieder in den alkalischen Bereich zu verschieben. Nach weiteren 10 Minuten weist das Reaktionsgemisch bei 20°C eine Viskosität von 60 cP auf. Das Reaktionsgemisch wird auf 80°C abgekühlt.

Stufe b)

Nach Zusatz von 5,9 g (3 mMol) einer 5 %igen wäßrigen Amidosulfonsäurelösung stellt sich bei 80°C ein pH-Wert von 4,5 im Reaktionsgemisch ein, der in der nachfolgenden sauren Kondensationsstufe dadurch aufrechterhalten wird, daß beim Absinken des pH-Wertes jeweils mit wenigen Tropfen Urotropinlösung nachgestellt wird. Nach einer Reaktionszeit von 30 Minuten ist eine Fällungszahl von 1:5 erreicht. Die Reaktion wird solange fortgesetzt, bis eine Fällungszahl von 1:1,8 erreicht ist.

Stufe c)

Nun werden 21,2 g (50 mMol) einer 33 %igen wäßrigen Urotropinlösung und 180 g (3 Mol) Harnstoff zugesetzt. Das Reaktionsgemisch wird auf 85°C erwärmt und 35 Minuten bei dieser Temperatur gehalten. Die Fällungszahl beträgt jetzt 1:0,7. Während das Reaktionsgemisch abgekühlt wird, werden 22,6 g (0,2 Mol) ε-Caprolactam zugesetzt.

Die erhaltene Harnstoff-Formaldehyd-Harzlösung ist mehrere Wochen lang stabil. Die Lösung ist wasserklar und begrenzt mit Wasser verdünnbar. Die Viskosität liegt bei 14 DIN-Sekunden (4 mm Auslaufbecher, 20°C). Nach 16 Stunden tritt in der Harzlösung eine leichte Trübung ein.

Beispiel 2

Stufe a)

In einem 2 l Vierhalskolben mit Ausstattung wie in Beispiel 1 beschrieben, werden 487 g (6 Mol) einer 37 %igen wäßrigen Formaldehydlösung, 1,6 g (0,8 mMol) einer 5 %igen wäßrigen Amidosulfonsäurelösung und 6,4 ml (15 mMol) einer 33 %igen wäßrigen Urotropinlösung vorgelegt. Nun werden 150 g Harnstoff und 34,2 g (0,2 Mol) eines Gemisches aus 60 Gew.-Teilen p- und 40 Gew.-Teilen o-Toluolsulfonamid zugesetzt. In der Reaktionslösung hat sich bei Raumtemperatur ein pH-Wert von 8,4 eingestellt. Das Reaktionsgemisch wird auf 50°C gebracht und 1 Stunde lang bei dieser Temperatur gehalten.

Stufe b)

Dem reaktionsgemisch werden 9,6 ml (4,8 mMol) einer 5 %igen wäßrigen Amidosulfonsäurelösung zugesetzt. Bei 50°C wird nun im Reaktionsgemisch ein pH-Wert von 6,6 gemessen und das Reaktionsgemisch auf eine Temperatur von 60°C erhitzt. Innerhalb von 90 Minuten werden in gleichmäßigen Abständen von 30 Minuten nochmals je 3,2 g (1,6 mMol) der 5 %igen wäßrigen Amidosulfonsäurelösung zugesetzt. Nach 100 Minuten wird im Reaktionsgemisch ein pH-Wert von 3,2 gemessen. Die Fällungszahl liegt bei 1:3.

Stufe c)

Jetzt werden 25,6 ml (60 mMol) einer 33 %igen wäßrigen Urotropinlösung zugesetzt, wodurch der pH-Wert auf 6,4 ansteigt. Nun werden 210 g (3,5 Mol) Harnstoff zugegeben und die Reaktionstemperatur auf 90 bis 95°C erhöht. Das Reaktionsgemisch wird 35 Minuten lang bei dieser Temperatur gehalten, bis eine Fällungszahl von 1:2 erreicht wird.

Während das Reaktionsgemisch abgekühlt wird, werden 14,6 g (0,2 Mol) N-Methylacetamid zugesetzt.

Die Harzlösung weist bei 20°C einen pH-Wert von 7,8 auf. Die Lösung ist wasserklar und über mehrere Wochen lagerstabil. Nach 10 Tagen tritt eine leichte Trübung der Harzlösung auf. Der Gehalt an freiem Harnstoff beträgt 1,6%, bezogen auf Feststoff.

Beispiel 3
Stufe a)

In einer Apparatur, wie in Beispiel 1 beschrieben, werden 487 g (6 Mol) einer 37 %igen Formalinlösung vorgelegt und 1,6 g (0,8 mMol) einer 5 %igen wäßrigen Amidosulfonsäurelösung zugesetzt. Nach Zugabe von 6,4 g (15 mMol) einer 33 %igen wäßrigen Urotropinlösung werden 120 g (2 Mol) Harnstoff und 34,2 g (0,2 Mol) p-Toluolsulfonamid eingetragen. In der Reaktionslösung wird jetzt bei Raumtemperatur ein pH-Wert von 8,2 gemessen. Die Reaktionslösung wird auf 90°C aufgeheizt und nach 10 Minuten mit 4,2 g (10 mMol) einer 33 %igen wäßrigen Urotropinlösung versetzt.

Stufe b)

Nach weiteren 10 Minuten wird auf 80°C abgekühlt und mit 5 %iger wäßriger Amidosulfonsäurelösung ein pH-Wert von 4,5 eingestellt, wobei 5,3 g (ca. 2,5 mMol) verbraucht werden. Ein weiteres Absinken des pH-Wertes in der Reaktionslösung wird jeweils mit wenigen Tropfen Urotropinlösung verhindert. Nach 30 Minuten wird eine Fällungszahl von 1:10 erreicht.

Stufe c)

Die Reaktionslösung wird mit 21,2 g (50 mMol) einer 33 %igen wäßrigen Urotropinlösung und 120 g Harnstoff versetzt. Es wird ein pH-Wert von 7,2 erreicht. Das Reaktionsgemisch wird 40 Minuten lang bei 85°C gehalten. Nach dieser Zeit wird eine Fällungszahl von 1:2,0 gemessen. Das Reaktionsgemisch wird abgekühlt und mit 16,9 g (0,15 Mol) ε-Caprolactam versetzt.

Die erhaltene Harnstoff-Formaldehyd-Harzlösung ist wasserklar. Nach ca. 5 Tagen zeigt sich eine leichte Trübung. Die Viskosität des unverdünnten Harzes liegt bei 13,5 Sekunden (4 mm DIN-Becher, 20°C).

Beispiel 4
Stufe a)

In einer Apparatur, wie in Beispiel 1 beschrieben, werden 487 g (6 Mol) einer 37 %igen wäßrigen Formaldehydlösung vorgelegt und mit 1,0 g (0,5 mMol) einer 5 %igen wäßrigen Amidosulfonsäurelösung versetzt. Nach Zusatz von 5,3 ml (12,5 mMol) einer 33 %igen wäßrigen Urotropinlösung werden 120 g (2 Mol) Harnstoff zugegeben, wodurch sich im Reaktionsgemisch ein pH-Wert von 8,3 einstellt. Das Reaktionsgemisch wird auf 90°C aufgeheizt und 20 Minuten lang bei dieser Temperatur gehalten.

Stufe b)

Nach Abkühlen des Reaktionsgemisches auf 60 bis 70°C wird mit 1,5 n $H_2SO_4$ ein pH-Wert von 6,0 eingestellt und danach werden weitere 120 g (2 Mol) Harnstoff eingetragen. Das Reaktionsgemisch wird auf 85°C aufgeheizt und ca. 15 Minuten lang bei dieser Temperatur gehalten, bis eine Fällungszahl von 1:5 erreicht ist. Während dieser Zeit sinkt der pH-Wert stetig. Der pH-Wert wird ständig kontrolliert, und es wird durch Zusatz jeweils einiger Tropfen Urotropinlösung dafür gesorgt, daß der pH-Wert des Reaktionsgemisches nicht unter 4,0 fällt.

Stufe c)

Nun werden 14,9 g (35 mMol) einer 33 %igen wäßrigen Urotropinlösung zugegeben und das Reaktionsgemisch bei einem pH-Wert von 7,1 ca. 10 Minuten bei einer Temperatur von 85°C belassen, bis die Fällungszahl 1:2 beträgt.

Stufe d)

Der pH-Wert der Reaktionslösung wird mit 1,5 n $H_2SO_4$ auf einen Wert von 4,5 eingestellt. Die Reaktionslösung wird 10 Minuten lang bei einer Temperatur von nicht mehr als 85°C gehalten, wozu zeitweilige Kühlung erforderlich wird, bis eine Fällungszahl von 1:0,5 erreicht ist. Anschließend wird abgekühlt und mit 22,6 g (0,2 Mol) ε-Caprolactam versetzt. Die erkaltete Harzlösung wird mit 30 %iger NaOH auf einen pH-Wert von 9,0 eingestellt.

Die Harnstoff-Formaldehydlösung ist wasserklar, besitzt eine DIN-Viskosität von 13,5 Sekunden (4 mm Auslaufbecher, 20°C) und zeigt erst nach einigen Stunden eine beginnende Trübung, die jedoch bei der Imprägnierung einer Papierträgerbahn nicht stört.

6

Beispiel 5
(nicht erfindungsgemäßes Vergleichsbeispiel gemäß DE—OS 24 48 472)

In einem 2 l Vierhalskolben, versehen mit Thermometer, Rückflußkühler, Rührer und einer Vorrichtung zur kontinuierlichen Messung des pH-Wertes, werden 584 g (7,2 Mol) einer 37 %igen Formalinlösung sowie 1 g (2 mMol) einer 20 %igen wäßrigen Amidosulfonsäurelösung vorgelegt. Nach weiterer Zugabe von 8 g (120 mMol) einer 25 %igen wäßrigen Ammoniaklösung und 210 g (3,5 Mol) Harnstoff, wobei sich im Reaktionsgemisch bei 20°C ein pH-Wert von 8 einstellt, wird der Ansatz auf 90°C erhitzt und unter gutem Rühren bei dieser Temperatur belassen. Innerhalb von 10 Minuten Reaktionszeit ist der pH-Wert des Reaktionsmediums, gemessen bei 90°C, auf 5,8 abgesunken. Durch weitere Zugabe von 8 g (120 mMol) einer 25 %igen wäßrigen Ammoniaklösung wird der pH-Wert wieder in den alkalischen Bereich verschoben. Nach weiteren 10 Minuten Reaktionszeit weist das Reaktionsgemisch bei 20°C eine Viskosität von 60 cP auf und wird mit 3 g (6 mMol) einer 20 %igen wäßrigen Amidosulfonsäurelösung versetzt. Es stellt sich im Reaktionsgemisch bei 90°C ein pH-Wert von 3,8 ein, der durch Zugabe von 3 g (45 mMol) einer 25 %igen wäßrigen Ammoniaklösung auf 4,4 bei 90°C angehoben wird. Bei diesem pH-Wert und einer Reaktionstemperatur von 90°C wird das Reaktionsgemisch bei guter Rührung 20 Minuten belassen. Der Reaktionsansatz weist jetzt bei 20°C eine Viskosität von 90 cP und einen pH-Wert von 5,2 auf. Das Reaktionsgemisch wird kurz abgekühlt, mit 30 g (0,5 Mol) Harnstoff und 25 g (370 mMol) einer 25 %igen wäßrigen Ammoniaklösung versetzt, wobei im Reaktionsgemisch ein pH-Wert bei 85°C von 6,5 resultiert. Die Temperatur wird wieder auf 90°C erhöht und der Ansatz bei dieser Temperatur weitere 20 Minuten zur Reaktion gebracht. Das auf 20°C abgekühlt, klare, farblose Harnstoff-Formaldehydharz weist einen pH-Wert von 7,2 und eine Viskosität von 95 cP auf.

Beispiel 6
(nicht erfindungsgemäßes Vergleichsbeispiel gemäß Beispiel IV der US—PS 3 198 761)

200 g einer 37 %igen Formalinlösung werden mit 1 n NaOH auf pH 7,5 gebracht. Nun werden 65 g Harnstoff zugesetzt. Der pH-Wert beträgt jetzt 9,1. Das Reaktionsgemisch wird auf eine Temperatur von 45°C gebracht. Nach 5 Minuten ist der pH-Wert auf 7,2 gefallen. Mit 30 %iger NaOH wird ein pH-Wert von 8,2 eingestellt. Das Reaktionsgemisch wird nun 25 Minuten lang bei einer Temperatur von 90°C gehalten. Es wird anschließend auf 80°C abgekühlt und mit 30 %iger $H_3PO_4$ ein pH-Wert von 3,5 eingestellt. Nach ca. 3 Minuten tritt eine deutlich exotherme Reaktion ein.

Durch intensive Kühlung wird das Reaktionsgemisch bei 75 bis 80°C gehalten. Nach 20 Minuten wird auf 45°C abgekühlt. Jetzt werden 126 g Harnstoff zugesetzt und weitere 3 Minuten bei 45°C gehalten. Es wird abgekühlt und im Reaktionsgemisch ein pH-Wert von 8,9 eingestellt.

Das Harz ist klar und mit Wasser mischbar.

Anwendungstechnische Prüfung der nach Beispiel 1 bis 6 erhaltenen Harzlösungen

Je 200 Gew.-Teile der in den Beispielen 1 bis 6 erhaltenen Harnstoffharzlösungen werden mit 2 Gew.-Teilen einer 50 %igen Härterlösung, bestehend aus dem Triäthanolammoniumsalz der p-Toluolsulfonsäure, und 2 Gew.-Teilen eines handelsüblichen Trennmittels auf Mineralölbasis intensiv vermischt. Ein weißes, pigmentiertes, saugfähiges Edelzellstoffpapier mit einem Flächengewicht von 80 g/m² wrid so beharzt, daß eine getränkte und beschichtete Papierträgerbahn mit einem Endgewicht von 200 g/m², bei einem Gehalt der beharzten Trägerbahn an flüchtigen Bestandteilen von 6,5% resultiert. Der Gehalt an flüchtigen Bestandteilen ist der Gewichtsverlust, den die mit Harz getränkte und beschichtete Papierträgerbahn bei einer 10 minutigen Temperaturbehandlung bei 160°C erleidet.

Die mit Harz getränkten und beschichteten Papierträgerbahnen werden im Stapel in einem Klimaschrank bei einer relativen Luftfeuchte von 95% 24 Stunden lang gelagert. Dabei wird diejenige Temperatur ermittelt, bei der gerade ein Verkleben der Stapel erfolgt, wobei die Stapel jeweils unter einem Druck von 2 kPa stehen. Die Ergebnisse dieser Prüfung sind in Tabelle I enthalten. Die mit Harz getränkten und beschichteten Trägerbahnen werden für die Oberflächenvergütung von 16 mm dicken Spanplatten verwendet. Die Preßbedingungen sind 3 Minuten, 160°C an der Heizplatte der Presse, 2000 kPa Preßdruck, Asbestpreßpolster, ohne Rückkühlung. Es wird gegen verchromte Messingbleche mit einem geminderten Glanzgrad verpreßt.

Die so vergüteten Spanplatten werden folgenden Prüfungen unterworfen:

a) Säuretest; es wird der Angriff auf die Oberfläche durch 0,2 n HCl über einen Zeitraum von 24 Stunden beurteilt

b) Gleichmäßigkeit, Glanz und Geschlossenheit der Oberfläche werden beurteilt

c) Wasserdampftest nach DIN 53 799

Die Beurteilung der Prüfungen nach a), b) und c) erfolgt durch eine Benotungsskala von 1 bis 6, wobei 1 für "sehr gut" und 6 für "völlig unzureichend" stehen.

d) Riß-Test; es wird das Verhalten der vergüteten Oberflächen gegenüber einer 20stündigen thermischen Dauerbelastung bei 70°C geprüft und in Anlehnung an die DIN 53 799 beurteilt, ob Rißbildung auftritt.

Die Prüfungsergebnisse sind in Tabelle I zusammengestellt.

TABELLE I

| Härzlösung gemäß Beispiel | opt. Aussehen | Trübung nach | Fällungszahl | Viskosität nach DIN 4 mm Düse | Penetrations- zeit* |
|---|---|---|---|---|---|
| 1 | klar | 16 Stunden | 1:0,7 | 14,0″ | 3,5″ |
| 2 | klar | 10 Tagen | 1:2 | 14,0″ | 1,5″ |
| 3 | klar | 5 Tagen | 1:1 | 13,5″ | 2,0″ |
| 4 | klar | 10 Stunden | 1:0,5 | 13,5″ | 1,9″ |
| 5 | trübe | — | — | 15,0″ | 2,0″ |
| 6 | klar | >10 Tagen | >1:10 | 13,8″ | 1,5″ |

* Die Penetrationszeit ist diejenige Zeit, die eine Harzlösung benötigt, um von unten nach oben ein 80 $g/m^2$ schweres Standard-Edelzellstoffpapier zu durchtränken. Zur besseren Endpunktbestimmung wird die zu prüfende Harzlösung eingefärbt.

TABELLE II

| Harzlösung gemäß Beispiel | Eigenschaften der getränkten und beschichteten Papier- trägerbahn im Klimaschrank bei 95% rel. LF. Die Stapel verkleben bei: | Eigenschaften der vergüteten Holzwerkstoffoberfläche | | | Riß-Test nach DIN 53 799 |
|---|---|---|---|---|---|
| | | Oberfläche Glanzgrad 40 | Säure-Test 0,1 n HCl | WD-Test | |
| 1 | 30—35°C | 2 | 2—3 | 2 | 0 |
| 2 | 35°C | 1—2 | 2 | 2 | 1 |
| 3 | 30°C | 2—3 | 2—3 | 2—3 | 0 |
| 4 | 40°C | 4 | 3—4 | 3—4 | 2 |
| 5 | 20—25°C | 4 | 3—4 | 3 | 2 |
| 6 | 15—20°C | 6* | 6** | 6 | 2 |

Oberfläche fleckig und offen
Harz läßt sich bereits mit Wasser ablösen

Hieraus ergibt sich, daß die erfindungsgemäß hergestellten Harnstoff-Formaldehyd-Harze allein die Kombination der gewünschten Eigenschaften zeigen.

**Patentansprüche**

1. Verfahren zur Herstellung von wärmehärtbaren Harnstoff-Formaldehyd-Harzen mit einem Mol-Verhältnis Harnstoff zu Formaldehyd von 1:1 bis 1:1,5, wobei man

a) Harnstoff und Formaldehyd in wäßriger Lösung mit einem Mol-Verhältnis von 1:2 bis 1:4 im pH-Bereich 7,5 bis 10 bei 40 bis 95°C 5 bis 120 Minuten umsetzt, sodann

b) Unter Einhaltung eines pH-Bereiches von 4 bis 6 bei 40 bis 95°C 1 bis 60 Minuten bis zu einer Fällungszahl von 1:1,5 bis 1:10 kondensiert,

c) Weiterkondensation unter Zugabe der restlichen Menge an Harnstoff,

dadurch gekennzeichnet, daß man in der Stufe c) die zur Erzielung eines Harnstoff/Formaldehyd-Mol-Verhältnisses von 1:1 bis 1:1,5 benötigte restliche Menge Harnstoff zugibt, die Weiterkondensation in einem pH-Bereich von 7,0 bis 10 vornimmt, wobei man die Kondensationsreaktion bei 70 bis 95°C 1 bis 45 Minuten bis zu einer Fällungszahl von 1:0,5 bis 1:3 durchführt und die erhaltene Lösung schließlich auf Raumtemperatur abkühlt.

2. Verfahren nach Anspruch 1, dadurch gekennzeichnet, daß man bei der Verfahrensstufe c) bis zu einer Fällungszahl von $1:\geqq 1,5$ umsetzt und in einer weiteren Verfahrensstufe

O 006 112

d) erneut im pH-Bereich 4 bis 6 bei 70 bis 95°C bis zu 15 Minuten bis zu einer Fällungszahl von 1:≧0,5 nachkondensiert, anschließend abkühlt und auf einen pH-Bereich von 7 bis 10 einstellt.

3. Verfahren nach Anspruch 1 oder 2, dadurch gekennzeichnet, daß man in der Stufe a) ein Molverhältnis von Harnstoff zu Formaldehyd von 1:2 bis 1:2,5 einhält.

4. Verfahren nach einem oder mehreren der vorhergehenden Ansprüche, dadurch gekennzeichnet, daß man in der Stufe c) Harnstoff in einer solchen Menge zusetzt, daß ein Molverhältnis von Harnstoff zu Formaldehyd von 1:1 bis 1:1,2 erhalten wird.

5. Verfahren nach einem oder mehreren der vorhergehenden Ansprüche, dadurch gekennzeichnet, daß man in den Stufen a) und b) für die Reaktion einen Temperaturbereich von 40 bis 70°C wählt.

6. Verfahren nach einem oder mehreren der vorhergehenden Ansprüche, dadurch gekennzeichnet, daß man den pH-Wert in Stufe a) und c) mit Ammoniak und/oder Urotropin einstellt und in Stufe b) innerhalb des pH-Bereiches von 4 bis 6 aufrechterhält.

7. Verfahren nach einem oder mehreren der vorhergehenden Ansprüche, dadurch gekennzeichnet, daß man dem Harnstoff-Formaldehyd-Harz vor, während oder nach seiner Herstellung an sich bekannte Modifizierungsmittel zusetzt.

8. Verfahren nach Anspruch 7, dadurch gekennzeichnet, daß man dem Reaktionsgemisch eine Aminosulfonsäure der Formel $NH_2(CH_2)_xSO_3H$, wobei x eine ganze Zahl von 0 bis 4 ist, vor oder im Verlauf der Verfahrensstufe a) in Mengen von 0,2 bis 1,0 mMol und vor der Verfahrensstufe b) in Mengen von 0,8 bis 10 mMol zusetzt.

9. Verwendung eines nach Anspruch 1 und gegebenenfalls einem oder mehreren der Ansprüche 2 bis 8 hergestellten Harnstoff-Formaldehyd-Harzes zum Tränken und/oder Beschichten von Trägerbahnen, die für die Oberflächenvergütung von Holzwerkstoffplatten bestimmt sind.

## Revendications

1. Procédé pour la préparation de résines urée-formaldéhyde thermodurcissable ayant un rapport molaire compris entre 1:1 et 1:1,5, dans lequel:

a) on fait réagir pendant 5 à 120 minutes l'urée et le formaldéhyde en solution aqueuse avec un rapport molaire compris entre 1:2 et 1:4, dans la gamme de pH de 7,5 à 10, entre 40 et 95°C, puis

b) en maintenant une gamme de pH de 4 à 6, on condense pendant 1 à 60 minutes entre 40 et 95°C jusqu'à un indice de précipitation compris entre 1:1,5 et 1:10,

c) on poursuit la condensation avec addition de la quantité restante d'urée,

caractérisé par le fait qu'à l'étape c), on ajoute la quantité restante d'urée nécessaire pour obtenir un rapport molaire urée/formaldéhyde compris entre 1:1 et 1:1,5, que l'on conduit la suite de la condensation dans une gamme de pH de 7,0 à 10, en exécutant la réaction de condensation entre 75 et 95°C pendant 1 à 45 minutes jusqu'à un indice de précipitation compris entre 1:0,5 et 1:3 et que finalement, on refroidit la solution obtenue à la température ambiante.

2. Procédé selon la revendication 1, caractérisé par le fait qu'à l'étape de procédé c) on fait réagir jusqu'à un indice de précipitation de 1:≫1,5 et qu'à une étape supplémentaire de procédé

d) on postcondense à nouveau dans la gamme de pH de 4 à 6, entre 70 et 95°C, jusqu'à 15 minutes, jusqu'à un indice de précipitation de 1:≫0,5, qu'ensuite on refroidit et on ajuste à une gamme de pH de 7 à 10.

3. Procédé selon l'une des revendications 1 et 2, caractérisé par le fait qu'à l'étape a), on maintient un rapport molaire urée/formaldéhyde compris entre 1:2 et 1:2,5.

4. Procédé selon une ou plusieurs des revendications précédentes, caractérisé par le fait qu'à l'étape c), on ajoute de l'urée en quantité telle que l'on obtienne un rapport molaire urée/formaldéhyde compris entre 1:1 et 1:1,2.

5. Procédé selon une ou plusieurs des revendications précédentes, caractérisé par le fait qu'aux étapes a) et b), on adopte pour la réaction un intervalle de température de 40 à 70°C.

6. Procédé selon une ou plusieurs des revendications précédentes, caractérisé par le fait que l'on ajuste le pH aux étapes a) et c) au moyen d'ammoniac et/ou d'urotropine et qu'à l'étape b), on le maintient dans la gamme de pH de 4 à 6.

7. Procédé selon une ou plusieurs des revendications précédentes, caractérisé par le fait que l'on ajoute à la résine urée-formaldéhyde, avant, pendant ou après sa préparation, des modificateurs connus.

8. Procédé selon la revendication 7, caractérisé par le fait que l'on ajoute au mélange réactionnel un acide aminosulfonique de la formule $NH_2(CH_2)_xSO_3H$ dans laquelle x est un nombre entier de 0 à 4,

# 0 006 112

avant l'étape de procédé a) ou au cours de celle-ci, à raison de 0,2 à 1,0 mmol et avant l'étape de procédé b), à raison de 0,8 à 10 mmol.

9. Application d'une résine urée-formaldéhyde préparée selon la revendication 1 et éventuellement une ou plusieurs des revendications 2 à 8, pour l'imprégnation et/ou le revêtement de bandes supports qui sont destinées à l'amélioration de la surface de panneaux en matériaux ligneux.

## Claims

1. Process for the preparation of thermosetting urea-formaldehyde resins having a molar ratio of urea to formaldehyde of 1:1 to 1:1.5 wherein

a) urea and formaldehyde, in aqueous solution and a molar ratio of 1:2 to 1:4 are reacted for 5 to 120 minutes at 40 to 95°C in a pH range from 7.5 to 10, and
b) while maintaining a pH range of 4 to 6, are then condensed at 40 to 95°C for 1 to 60 minutes until a precipitation ratio of 1:1.5 to 1:10 is achieved, and
c) further condensation is carried out with the addition of the remaining amount of urea,

characterised in that, in step c), the remaining amount of urea required to achieve a urea/formaldehyde molar ratio of 1:1 to 1:1.5 is added, the further condensation is carried out in a pH range from 7.0 to 10, the condensation reaction being carried out at 70 to 95°C for 1 to 45 minutes until a precipitation ratio of 1:0.5 to 1:3 is achieved, and the resulting solution is finally cooled to room temperature.

2. Process according to Claim 1, characterised in that, in process step c), the reaction is carried out until a precipitation ratio of $1:\geqq1.5$ is achieved, and, in a further process step,

d) condensation is continued once again in a pH range from 4 to 6 at 70 to 95°C for up to 15 minutes until a precipitation ratio of $1:\geqq0.5$ is achieved, and the mixture is then cooled and adjusted to a pH range from 7 to 10.

3. Process according to Claim 1 or 2, characterised in that, in step a), the molar ratio of urea to formaldehyde is maintained at 1:2 to 1:2.5.

4. Process according to one or more of the preceding claims, characterised in that, in step c), urea is added in an amount such that a molar ratio of urea to formaldehyde of 1:1 to 1:1.2 is obtained.

5. Process according to one or more of the preceding claims, characterised in that, in steps a) and b), a temperature range of from 40 to 70°C is chosen for the reaction.

6. Process according to one or more of the preceding claims, characterised in that, in steps a) and c), the pH value is adjusted with ammonia and/or urotropin and, in step b), the pH is maintained within the range from 4 to 6.

7. Process according to one or more of the preceding claims, characterised in that modifiers which are known per se are added to the urea-formaldehyde resin before, during or after its preparation.

8. Process according to Claim 7, characterised in that an aminosulphonic acid of the formula $NH_2(CH_2)_xSO_3H$, wherein x is an integer from 0 to 4, is added to the reaction mixture in amounts of 0.2 to 1.0 mmol before or in the course of process step a), and in amounts of 0.8 to 10 mmol before process step b).

9. Use of a urea-formaldehyde resin prepared according to Claim 1 and, if appropriate, one or more of Claims 2 to 8, for impregnating and/or coating support webs intended for the surface treatment of sheets made from wood-based material.

10